Europäisches Patentamt

European Patent Office

Office européen des brevets

(19)

(11) Veröffentlichungsnummer: **0 078 946**
B1

(12) **EUROPÄISCHE PATENTSCHRIFT**

(45) Veröffentlichungstag der Patentschrift:
30.04.86

(51) Int. Cl.⁴: **F 16 L 23/00, F 16 L 17/06**

(21) Anmeldenummer: 82109682.3

(22) Anmeldetag: 20.10.82

(54) Flanschring für Rohre.

(30) Priorität: 05.11.81 DE 3143893

(43) Veröffentlichungstag der Anmeldung:
18.05.83 Patentblatt 83/20

(45) Bekanntmachung des Hinweises auf die Patenterteilung:
30.04.86 Patentblatt 86/18

(84) Benannte Vertragsstaaten:
AT BE CH DE FR GB IT LI LU NL SE

(56) Entgegenhaltungen:
AT - B - 363 232
DE - A - 2 750 110

(73) Patentinhaber: Karl Meinig KG, Seitinger Strasse 186,
D-7201 Wellheim (DE)

(72) Erfinder: Meinig, Manfred, Goethestrasse 186,
D-7201 Wellheim (DE)

(74) Vertreter: Patentanwälte Dipl.-Ing. Klaus Westphal Dr.
rer. nat. Bernd Mussgnug Dr. rer.nat. Otto Buchner,
Waldstrasse 33, D-7730 VS-Villingen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft einen auf ein dünnwandiges rundes Blechrohr aufsetzbaren einstückigen Flanschring zur Herstellung einer Stoßverbindung zwischen zwei Rohrabschnitten mit einem etwa radial nach außen stehenden Befestigungsflansch und einem vom inneren Ende des Befestigungsflansches abstehenden Schenkel.

Es sind bereits verschiedene Flanschringe dieser Art bekannt, die wenigstens einen auf der Außenseite des Rohrs eingespreizten Ringsteg und meist zusätzlich einen gegenüber dem eingespreizten Ringsteg auf der Innenseite des Rohrs anliegenden Widerlagerteil aufweisen. Diese bekannten Flanschringe sind daher verhältnismäßig kompliziert ausgebildet, das Einspannen zwischen Ringsteg und Widerlagerteil setzt eine hohe Stabilität und damit einen hohen Materialeinsatz voraus, und das Einbringen eines Rohrendes zwischen die an Außenseite und Innenseite anliegenden Teile des Flanschringes ist nicht ganz einfach, insbesondere auch deswegen, weil dünnwandige Blechrohre in der Regel einen nicht ganz gleichmäßig kreisförmigen Querschnitt besitzen. Zudem werden dünnwandige Blechrohre, z.B. im Lüftungskanalbau, überwiegend als billige Wickelfalzrohre hergestellt, die aus schraubenförmig gewickelten Blechbahnen bestehen, wobei die Blechbahnen durch Falze miteinander verbunden sind, die von der äußeren Mantelfläche nach außen abstehen. Diese Falze verhindern ein Einschieben des Rohrendes in einen bekannten Flanschring.

Durch die Erfindung soll ein Flanschring für dünnwandige Blechrohre geschaffen werden, der wesentlich einfacher ausgebildet ist als die bekannten Flanschringe, geringeren Materialaufwand bedingt und in besonders einfacher und stabiler Weise am Rohrende angebracht werden kann.

Diese Aufgabe wird erfindungsgemäß gelöst durch einen vom Schenkel schräg nach außen zum Befestigungsflansch hin abgewinkelten Ringsteg, wobei Schenkel und Ringsteg unter Vorspannung ins Rohrinnere eintreibbar sind.

Da der erfindungsgemäße Flanschring nur an der Innenseite des Rohres anliegt, kann er wesentlich einfacher in das Rohr eingesetzt werden, selbst wenn das Rohr nicht ganz kreisrund ist. Durch das Eintreiben des Schenkels mit dem Ringsteg in das Rohrinnere wird das Rohr von innen her unter Spannung gesetzt, wodurch es das gewünschte kreisförmige Profil zwangsläufig erhält. Dies ist gerade bei einem dünnwandigen Blechrohr von besonderem Vorteil. Die Stabilität der Verbindung des Flanschrings mit dem Rohr ist außerordentlich fest, da die Kraft des Spannrings von innen nach außen wirkt und das Blechrohr auf Zug und nicht auf Druck belastet ist, wie es bei den bekannten Flanschringen der Fall ist. Insbesondere bei Wickelfalzrohren behindert der auf der Außenfläche des Rohres sitzende Falz das Eintreiben des nur innen anliegenden erfindungsgemäßen Flanschringes nicht.

Vorzugsweise ist der größte Durchmesser des Schenkels kleiner und der größte Durchmesser des Ringstegs im unbelasteten Zustand des Flanschrings größer als der Innendurchmesser des Rohres, auf den der Flanschring aufgeschlagen werden soll. Dadurch läßt sich das Ende des Schenkels, an dem der Ringsteg sitzt, einfacher ins Rohrinnere ein-bringen und während des folgenden Eintreibens des Ringstegs, das zweckmäßigerweise durch Aufschlagen mit dem Hammer erfolgt, wird der größte Durchmesser des Ringstegs verkleinert und somit dieser unter Vorspannung gesetzt.

Der Schenkel steht zweckmäßigerweise etwa senkrecht vom radialen Befestigungsflansch ab, und der Ringsteg ist im spitzen Winkel vom Schenkel zum Befestigungsflansch hin zurückgebogen. Die beim Eintreiben des Flanschrings in das Rohr erzielte Stabilität hängt im wesentlichen von den Eigenschaften des Ringstegs, wie Blechstärke, Breite, Abschrägungswinkel bezüglich des Schenkels und von seinem größten Durchmesser bezüglich des Rohrs, ab und kann daher durch freie Wahl dieser Parameter beliebig verändert werden.

Bei einer bevorzugten Ausführungsform weist der Schenkel einen etwa parallel zu sich selbst zurückgebogenen, den Ringsteg tragenden Zentrierschenkel auf, an dessen Ende erst der Ringsteg sitzt. Dieser etwa parallel zur Rohrinnenwand verlaufende, jedoch einen kleineren Durchmesser besitzende Zentrierschenkel erleichtert das Einführen des Flanschrings zunächst von Hand in das u.U. nicht ganz kreisrunde Rohrende wesentlich. Durch geeignete Wahl des Durchmessers dieses Zentrierschenkels läßt sich erreichen, daß der Flanschring nach dem Einschieben des Zentrierschenkels im Rohr gut haftet und anschließend ein problemloses Aufschlagen des Ringstegs mittels eines Hammers erfolgen kann.

Bei der Herstellung einer Stoßverbindung zwischen zwei Rohrabschnitten mittels des erfindungsgemäßen Flanschrings können die beiden etwa radial nach außen stehenden Befestigungsflansche in beliebiger herkömmlicher Weise, beispielsweise durch Schraubverbindung, Klammern od.dgl., aneinander festgelegt werden, wobei zweckmäßigerweise ein Dichtungsring zwischen die Befestigungsflansche eingelegt wird. Da infolge der erzielten Vorspannung eine gute Abdichtung zwischen dem äußeren Rand des Ringstegs und der Innenwand des Rohrs erzielt wird, genügt diese Form der Abdichtung.

Bei einer bevorzugten Ausführungsform weist jedoch der Befestigungsflansch an seinem äußeren Ende einen zur gleichen axialen Seite wie der Schenkel um mehr als 90 ° umgebogenen Spannteil auf. Die Spannteile von aneinander anstoßenden Flanschringen können dann durch einen gemeinsamen Spannring oder auch durch geeignet geformte Klammern zusammengehalten werden.

Zur weiteren Erleichterung der Einführung des erfindungsgemäßen Flanschrings in das Rohrende kann am inneren Ende des Spannteils ein schräg nach innen zum Befestigungsflansch hin gebogener Führungsteil vorgesehen werden, dessen kleinster Durchmesser jedoch größer ist als der Außendurchmesser des Rohrs, so daß er nicht am Rohr anliegt, sondern nur zur Erleichterung der Einführung des Flanschrings in das Rohr dient.

Besonders vorteilhaft ist eine Ausführungsform des erfindungsgemäßen Flanschrings, die einen axialen Schlitz enthält. Dieser axiale Schlitz ermöglicht eine einfache Anpassung des Flanschringdurchmessers an den jeweiligen Rohrdurchmesser. Wenn der ursprüngliche Durchmesser des Flanschrings zu groß ist, kann dieser in sehr einfacher Weise auf einer Seite des Schlitzes durch Abschneiden parallel zur Schlitzwandung gekürzt und durch Zusammendrücken des Flanschrings der Durchmesser verkleinert werden. Andererseits kann der Durchmesser des Flanschrings durch Aufspreizen des Schlitzes und Einlegen eines profilierten Abstandsstückes geeignet angepaßt werden.

Die Erfindung betrifft ferner ein sehr einfaches und zweckmäßiges Verfahren zur Herstellung des erfindungsgemäßen Flanschringes, bei welchem ein langgestreckter Blechstreifen, dessen Länge etwa dem Umfang des zu erzeugenden Flanschringes entspricht, profiliert und anschließend in Ringform gebogen wird. Dabei ergibt sich zwangsläufig ein Flanschring mit axialem Schlitz, der die oben geschilderten vorteilhaften Eigenschaften besitzt.

Die Erfindung bezieht sich auch auf eine zwei Flanschringe aufweisende Stoßverbindung zwischen zwei dünnwandigen Blechrohrabschnitten, wobei die beiden Befestigungsflansche unter Zwischenlegung eines Dichtungsringes durch Befestigungsmittel wie Schrauben o.dgl. aneinander festgelegt sind. Bei einer bevorzugten Ausführungsform dieser Stoßverbindung werden zwei Flanschringe mit einem axialen Schlitz und an den äußeren Enden der Befestigungsflansche gebogenen Spannteilen verwendet, wie sie oben geschildert wurden. Die gegenseitige Festlegung der beiden Flanschringe erfolgt zweckmäßigerweise dadurch, daß auf der Außenseite der beiden Spannteile ein deren Form mit seiner Innenfläche etwa angepaßter Spannring kraftschlüssig anliegt. Der Spannring weist vorzugsweise einen axialen Schlitz auf und die am Schlitz anliegenden aufgebogenen Enden werden durch eine Schraube oder durch ein Spannschloß zusammengezogen, so daß ein erwünschter Axialdruck auf die Spannteile ausgeübt wird.

Normalerweise ist die Festlegung der Flanschringe an den Enden der Blechrohrabschnitte durch die Spreizkraft der sich in das Material der Blechrohre leicht eingrabenden Ringstege stabil genug. Wenn es jedoch bei bestimmten Anwendungen erwünscht sein sollte, noch eine zusätzliche Sicherheit für die Festlegung der Flanschringe in den Rohrenden zu erzielen, so können in weiterer Ausgestaltung der Erfindung auf der Innenseite des Endes jedes Blechrohrabschnittes Vorsprünge angebracht sein, an denen sich die Außenkante des jeweiligen Ringstegs abstützt. Diese Vorsprünge können beispielsweise in Form von aus dem Blech der Rohrabschnitte nach innen herausgedrückten Nocken oder Lappen oder auch durch in die Rohrwandung eingesetzte Hohlnieten oder dergleichen in einfacher Weise verwirklicht werden.

Es ist festzustellen, daß der erfindungsgemäße Flanschring nicht nur äußerst einfach hergestellt und an einem Rohrende äußerst zweckmäßig und stabil angebracht werden kann, sondern daß er auch eine formschöne Verbindung ergibt, da lediglich die nach außen stehenden Befestigungsflansche, gegebenenfalls sogar nur der die Befestigungsflansche überdeckende Spannring von außen sichtbar sind. Der erfindungsgemäße Flanschring ist infolge seiner Formgebung auch bei der Handhabung bequem und handfreundlich, und er kann sehr schnell und einfach, insbesondere ohne Verwendung von Maschinen oder Sonderwerkzeugen lediglich durch einen Hammer in das Rohrende eingetrieben werden, was auf Baustellen einen kaum zu überschätzenden Vorteil darstellt. Außendurchmesser und Vorspannung des Flanschrings können mit sehr einfachen Mitteln, z.T. noch auf der Baustelle selbst, verändert werden. Insbesondere bei einem Flanschring mit axialem Schlitz kann die erwähnte Durchmesserverringerung durch Einkürzen ganz einfach mit einer Eisensäge vorgenommen werden. Ist jedoch der Durchmesser zu klein, so kann ebenso einfach der Schlitz vergrößert und ein Abstandsstück eingesetzt werden. Das Aufschlagen des Flanschrings auf das Rohrende erfolgt dabei zweckmäßigerweise so, daß zunächst die den Schlitz enthaltende Stelle in das Rohr eingetrieben wird und anschließend das Aufschlagen vom Schlitz weg in beiden Richtungen erfolgt.

Der innen unter Vorspannung anliegende Ringsteg erteilt dem dünnwandigen Blechrohr nicht nur eine kreisrunde Form, sondern auch eine gute Steifigkeit. Infolge der profilierten Rundform des erfindungsgemäßen Flanschrings muß zur Erzielung der gewünschten Steifigkeit das Material des Flanschrings selbst nicht besonders stark sein, so daß der Materialverbrauch relativ gering ist. Die Herstellung des Flanschrings aus verzinktem Blechband durch Profilieren und Rundbiegen kann durch sehr einfache Maschinen vollautomatisch erfolgen. Auch der eine Stoßverbindung zusammenhaltende Spannring kann auf ähnliche Weise hergestellt werden.

Die einen axialen Schlitz aufweisende Ausführungsform des Flanschrings ist nicht nur wegen der einfachen Anpassungsmöglichkeit des Flanschringdurchmessers an den jeweiligen Rohrdurchmesser, sondern auch wegen der einfachen Herstellung aus einem langgestreckten Blechstreifen sehr vorteilhaft. Es hat sich jedoch gezeigt, daß nicht mit hinreichender Sicherheit und bei jeder Flanschringstärke ein Festsitzen des Flanschrings im Rohrende gewährleistet werden kann, wenn nicht die beiden an den Schlitz angrenzenden Enden des Flanschrings beim Eintreiben in das Rohr gegeneinandergepreßt werden, die Schlitzbreite also Null wird. Werden die Flanschringenden jedoch gegeneinander gepreßt, so kann es vorkommen, daß die Stirnflächen der beiden Flanschringenden nicht deckungsgleich aneinander liegen bleiben, sondern gegenseitig in radialer und/oder axialer Richtung verrutschen. Die Folgen eines solchen Verrutschens sind äußerst nachteilig, da der Ringflansch seinen Halt am Rohr verliert.

Diese Schwierigkeit wird in weiterer Ausgestaltung der Erfindung dadurch beseitigt, daß zur gegenseitigen Festlegung der an den axialen Schlitz angrenzenden Enden des Flanschringes eine gemeinsame Klammer vom Schlitz her auf beide Enden reibungsschlüssig aufgesteckt ist.

Die Klammer muß vor dem Eintreiben des Flanschrings in das Rohr nur lose auf die beiden Flanschringenden aufgesteckt werden und wird durch die beim Eintreiben in das Rohr auf den Flanschring ausgeübten Radialkräfte in seine endgültige, die Flanschringenden festhaltende Lage gepreßt.

Aus Platzgründen und wegen der dort am stärksten auftretenden Radialkräfte wird die Klammer vorzugsweise auf die beiden an den Schlitz angrenzenden Enden des im Rohrinneren angeordneten Schenkels des Flanschrings aufgesteckt.

Bei einer vorteilhaften Ausgestaltung weist die Klammer einen Oberteil, welcher an der zum Rohr hinweisenden Fläche der Enden des Schenkels zur Anlage kommt, und einen Unterteil auf, welcher an der vom Rohr wegweisenden Fläche der Enden des Schenkels zur Anlage kommt. Ober- und Unterteil sind dabei platten- oder lappenförmig ausgebildet und üben einen Druck auf die anliegenden Flächen der Flanschringenden aus.

Um die gegenseitige Festlegung der Flanschringenden in axialer Richtung des Rohres noch zu verstärken, sind bei einer bevorzugten Ausführungsform der Klammer Ober- und Unterteil durch senkrecht dazu verlaufende schmale Stege miteinander verbunden, die beim Eintreiben von Schenkel und Ringsteg in das Rohr unter Bildung von Nuten in die Stirnflächen der an den Schlitz angrenzenden Enden des Schenkels eindringen.

Die auf den Flanschring dabei ausgeübten Radialkräfte pressen die beiden Flanschringenden am Schlitz so fest zusammen, daß die Stege selbsttätig in die Stirnflächen der Flanschringenden hineingedrückt werden. Dadurch wird eine zusätzliche sichere Festlegung der Flanschringenden in axialer Richtung des Rohres erreicht.

Um das Einfädeln der Enden des Flanschrings in die Klammer zu erleichtern, weisen bei einer vorteilhaften Ausgestaltung Ober- und Unterteil in beiden Aufsteckrichtungen divergierende Endabschnitte auf. Zusätzlich können die divergierenden Endabschnitte seitlich nach innen verlaufende Anschrägungen aufweisen, um das Einfädeln auch in axialer Richtung zu erleichtern.

Zweckmäßigerweise erfolgt die Herstellung der Klammer aus einem einstückigen Blechteil durch Ausstanzen und Biegen, wobei Ober- oder Unterteil senkrecht zum Schlitz eine Unterbrechung aufweist.

Um eine ausreichende Festigkeit und Klemmkraft der Klammer zu erzielen, wird diese bei einer vorteilhaften Ausführungsform aus Federstahlblech hergestellt.

Federstahl ist verhältnismäßig schwer zu verarbeiten und ist auch als Material teurer als normales Stahlblech. Bei einer zweckmäßigen Ausführungsform wird daher vorgesehen, daß Oberteil und Unterteil getrennt voneinander aus gewöhnlichem Stahlblech hergestellt und durch einen Federstahlbügel zusammengehalten sind, der durch je zwei sich überdeckende Löcher von Oberteil und Unterteil geführt ist und an den Außenflächen von Oberteil und Unterteil anliegt. Dadurch werden die beiden aus billigerem Material hergestellten Teile durch einen einstückigen Bügel aus Federstahl fest zusammengehalten, der den auftretenden Beanspruchungen mühelos standhält.

Der Federstahlbügel ist dabei allgemein C-förmig ausgebildet,und die Unterbrechung des aus einem Stück gebogenen Federstahlbügels liegt zweckmäßigerweise etwa in der Mitte der Außenfläche des Unterteils.

Anhand der Figuren werden Ausführungsbeispiele der Erfindung näher erläutert. Es zeigen:

Fig. 1 einen Axialschnitt durch eine erste Ausführungsform des erfindungsgemäßen Flanschrings in unbelastetem Zustand mit benachbartem Rohrende,

Fig. 2 einen Axialschnitt durch eine zwei Flanschringe gemäß Fig. 1 aufweisende Stoßverbindung zwischen zwei Rohrenden,

Fig. 3 und 4 der Figur 2 entsprechende Axialschnitte durch Stoßverbindungen, die eine zweite und dritte Ausführungsform des erfindungsgemäßen Flanschrings enthalten,

Fig. 5 einen axialen Teilschnitt durch den auf das Rohr aufgesetzten Flanschring mit einer aus dem Blech des Rohrendes herausgedrückten Sicherungsnocke,

Fig. 6 eine Schrägansicht der Sicherungsnocke,

Fig. 7 einen der Fig. 5 entsprechenden Teilschnitt mit einem aus dem Blech des Rohrendes herausgedrückten Sicherungslappen,

Fig. 8 eine Schrägansicht des Sicherungslappens,

Fig. 9 einen den Fig. 5 und 7 entsprechenden Teilschnitt mit einer am Rohrende angebrachten Sicherungsniete,

Fig. 10 eine Schrägansicht einer ersten Ausführungsform einer Klammer, die auf die axialen Enden des Flanschrings aufgesteckt ist,

Fig. 11 einen axialen Teilschnitt durch den auf das Rohr aufgesetzten Flanschring mit aufgesteckter Klammer gemäß der Linie XI - XI in Fig. 12,

Fig. 12 einen Teilschnitt längs der Linie XII - XII in Fig. 11,

Fig. 13 einen Teilschnitt längs der Linie XIII - XIII in Fig. 11,

Fig. 14 eine der Fig. 10 entsprechende Schrägansicht einer zweiten Ausführungsform der Klammer,

Fig. 15 eine Untersicht der in Fig. 14 dargestellten Klammer,

Fig. 16 einen Schnitt längs der Linie XVI - XVI in Fig. 15 und

Fig. 17 einen Schnitt längs der Linie XVII - X II in Fig. 15.

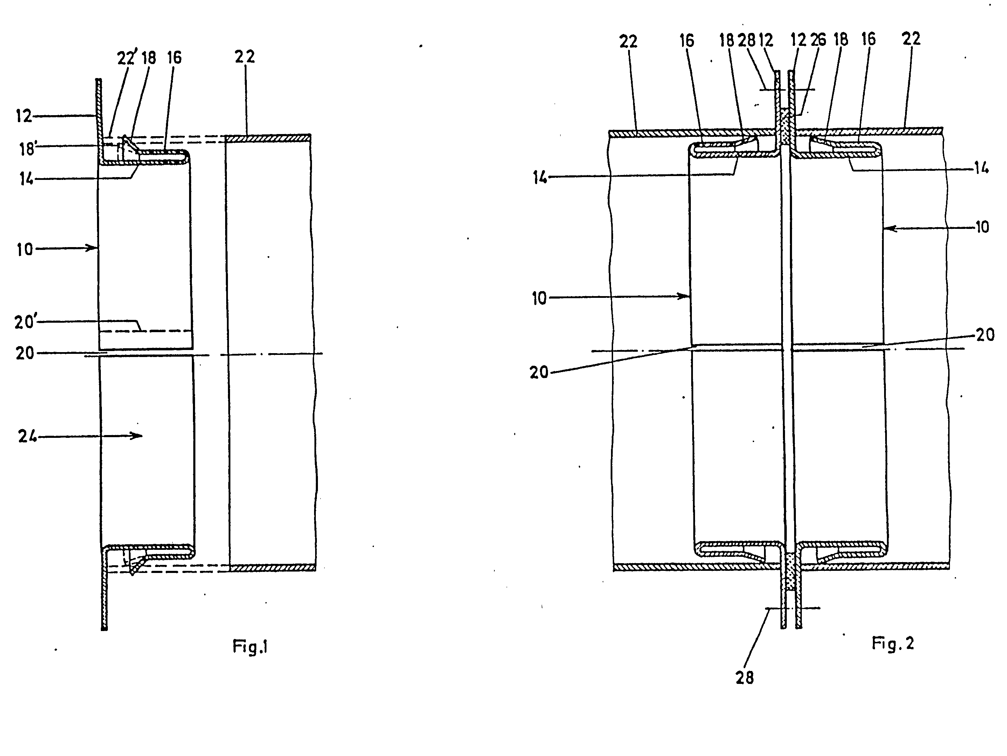

Der in Fig. 1 dargestellte, allgemein mit 10 bezeichnete Flanschring weist einen radialen Befestigungsflansch 12, einen etwa im rechten Winkel dazu, also etwa axial verlaufenden Schenkel 14, einen etwa parallel zum Schenkel 14 zurückgebogenen Zentrierschenkel 16, einen vom Zentrierschenkel 16 schräg nach außen zum Befestigungsflansch hin abgewinkelten Ringsteg 18 sowie einen axialen Schlitz 20 auf. In dem in Fig. 1 in ausgezogenen Linien dargestellten unbelasteten Zustand des Flanschrings 10 ist der größte Durchmesser des Ringstegs 18 größer als der Innendurchmesser des Rohrs 22, in welches der Flanschring 10 eingetrieben werden soll. In gestrichelten Linien ist in Fig. 1 angedeutet, wie das Rohr 22' den Ringsteg 18' verbiegt und dadurch unter Vorspannung setzt, so daß sich durch das Aufschlagen des Flanschrings 10 auf das Rohr 22 in Richtung des Pfeils 24 eine außerordentlich stabile Verbindung zwischen Flanschring 10 und Rohr 22 ergibt.

Beim Anbringen des Flanschrings 10 am Ende des Rohrs 22 kann zunächst lediglich der Zentriersteg 16 von Hand ins Rohrinnere eingeschoben werden. Durch geeignete Durchmesserwahl, die durch Einkürzen des Flanschrings 10 parallel zum Schlitz 20, beispielsweise längs der Linie 20', oder durch Aufspreizen des Schlitzes 20 und Einschieben eines Abstandsstückes verwirklicht werden kann, läßt sich in sehr einfacher Weise erreichen, daß der Zentrierflansch 16 im Rohrende haftet. Anschließend wird der Flanschring 10 in Richtung des pfeils 24 vollständig in das Ende des Rohrs 22 eingeschlagen, wobei das Einschlagen im Bereich des Schlitzes 20 beginnt und sodann in Umfangsrichtung des Flanschrings 10 nach beiden Seiten fortschreitet, bis der dem Schlitz 20 radial gegenüberliegende Bereich des Flanschrings erreicht ist. Dabei biegt sich der Ringsteg 18 unter Vorspannung in die in Figur 1 gestrichelt eingezeichnete flachere Form 18', wobei sein äußerer Rand sich an der Innenseite des Rohrs 22 einspreizt.

In allen Figuren sind für gleiche oder entsprechende Teile die gleichen Bezugszeichen verwendet wie in Fig. 1. Bei der in Fig. 2 dargestellten Stoßverbindung von zwei dünnwandigen Blechrohren 22 sind zwei Flanschringe 10 gemäß Fig. 1 verwendet, wobei zwischen den beiden Befestigungsflanschen 12 ein Dichtungsring 26 angeordnet ist. Durch strichpunktierte Linien 28 angedeutete Schraubverbindungen halten die beiden Befestigungsflansche 12 unter Fressung des Dichtungsrings 26 zusammen.

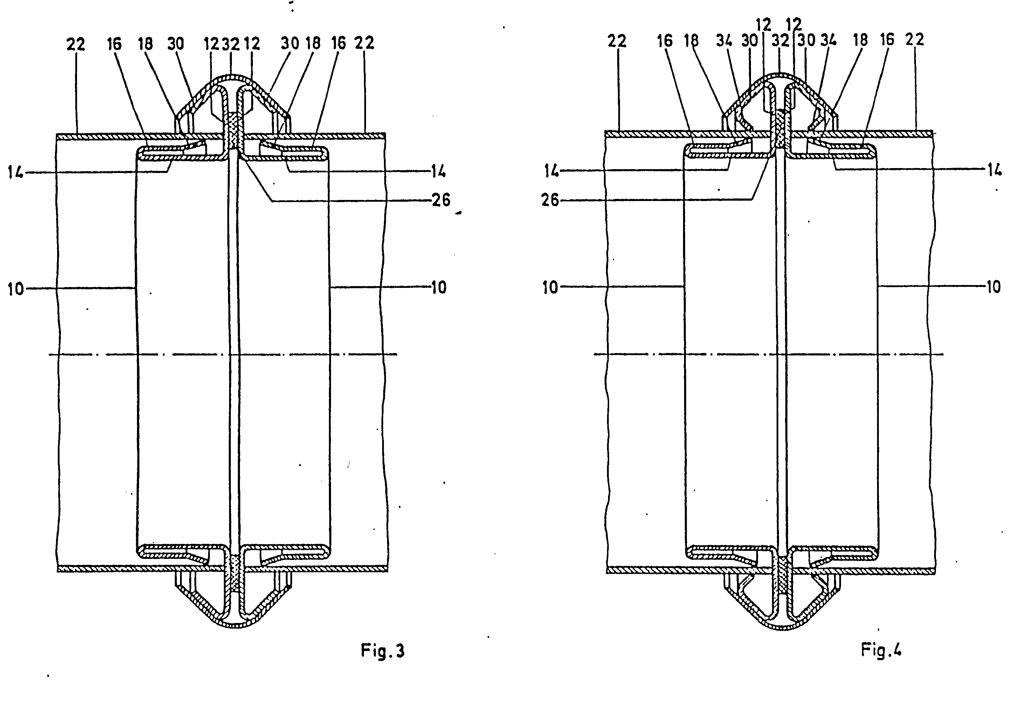

Bei der in Fig. 3 dargestellten Stoßverbindung weisen die Befestigungsflansche 12 der Flanschringe 10 an ihren äußeren Enden einen zur gleichen axialen Seite wie der Schenkel 14 um mehr als 90° umgebogenen Spannteil 30 auf. Die Außenseiten der Spannteile 30 werden von einem getrennten, im Profil symmetrisch gebogenen Spannring 32 umfaßt, der der Außenseite der Spannteile 30 kraftschlüssig anliegt. Der Kraftschluß kann z.B. durch eine nicht gezeigte Schraubverbindung oder ein Spannschloß an zwei durch einen Axialschlitz gebildeten Enden erzeugt sein. Dadurch ergibt sich eine einfach herzustellende und einfach zu montierende feste Verbindung zwischen den beiden Flanschringen.

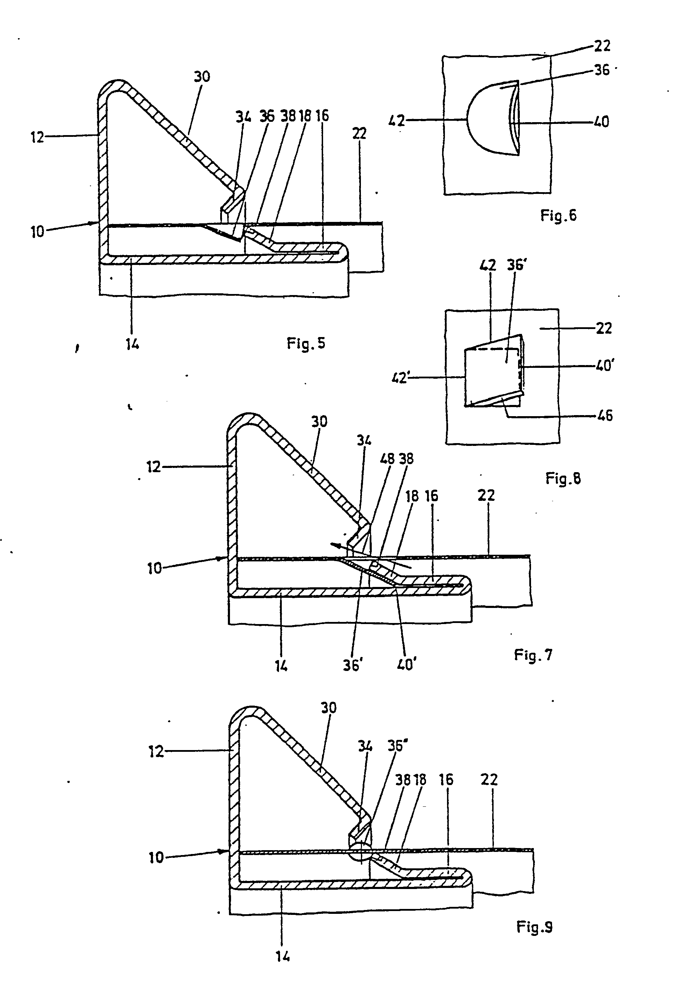

Die Stoßverbindung gemäß Fig. 4 entspricht im wesentlichen der in Fig. 3 gezeigten. Hier sind jedoch zusätzlich an den inneren Enden der Spannteile 30 schräg nach innen zu den Befestigungsflanschen 12 hin gebogene Führungsteile 34 vorgesehen, welche im Abstand von der Außenwand der Rohre 22 enden. Diese Führungsteile 34 sollen lediglich zusätzlich das Einführen der Flanschringe 10 in das Ende der Rohre 22 erleichtern.

In den Fig. 5 - 9 sind Ausführungsbeispiele von Vorsprüngen an der Innenseite der Rohrenden dargestellt, die bei bestimmten Ausführungsformen eine zusätzliche Sicherung der bei normaler Beanspruchung von selbst in den Rohrenden festsitzenden Flanschringe bewirken. Bei der in den Fig. 5 und 6 dargestellten Ausführungsform handelt es sich um aus der Blechwand des Rohrendes 22 nach innen herausgedrückte runde Nocken 36, deren höhere innere, an der Außenkante 38 des Ringstegs 18 zur Anlage kommende Enden 40 von der nach innen angrenzenden Blechwand abgeschert sind, während die äußeren, niedriger werdenden und in die Blechwand des Rohrendes 22 übergehenden Enden 42 der Nocken 36 mit der Blechwand zusammenhängen. Es ist zwar in Fig. 5 nur eine Nocke 36 dargestellt, es ist jedoch klar, daß mehrere derartige Nocken 36 rings um den Umfang des Rohrendes 22 angebracht werden können. Durch das Anliegen der Kante 38 des Ringstegs 18 an den inneren Enden 40 der Nocken 36 ergibt sich eine außerordentlich sichere und luftdichte Festlegung des Flanschrings 10 im Rohrende 22.

Die in den Fig. 7 und 8 dargestellte Ausführungsform unterscheidet sich von der vorangehenden lediglich dadurch, daß statt der runden Nocken 36, von denen nur die Vorderkante 40 von der Wandung des Rohrs 22 abgeschert ist, bei dieser Ausführungsform rechteckige Lappen 36' aus der Wandung des Rohrabschnittes 22 herausgedrückt sind, die nicht nur an der Innenkante 40', sondern auch an den beiden Seitenkanten 44 und 46 von der umgebenden Wandung des Blechrohrabschnittes 22 abgeschert sind. Sie hängen lediglich noch längs des äußeren Rindes 42' mit der Wandung des Rohrabschnittes 22 zusammen und stehen von diesem Rand schräg nach innen. Die Außenkante 38 des Ringstegs 18 ist bei dieser Ausführungsform direkt an der Innenkante 40' der Lappen 36' eingehängt, so daß die Sicherung des Flanschrings 10 gegen ein Herausrutschen noch größer ist als bei der Ausführungsform mit den Nocken gemäß Fig. 5 und 6. Andererseits muß aber hier in Kauf genommen werden, daß die Abdichtung der Rohrwandung bei diesem Ausführungsbeispiel nicht ganz so gut ist, da etwas Luft gemäß dem Pfeil 48 aus dem Rohr abströmen kann. Diese Ausführungsform kann daher nur angewendet werden, wenn diese geringfügige Ausströmung in Kauf genommen werden kann.

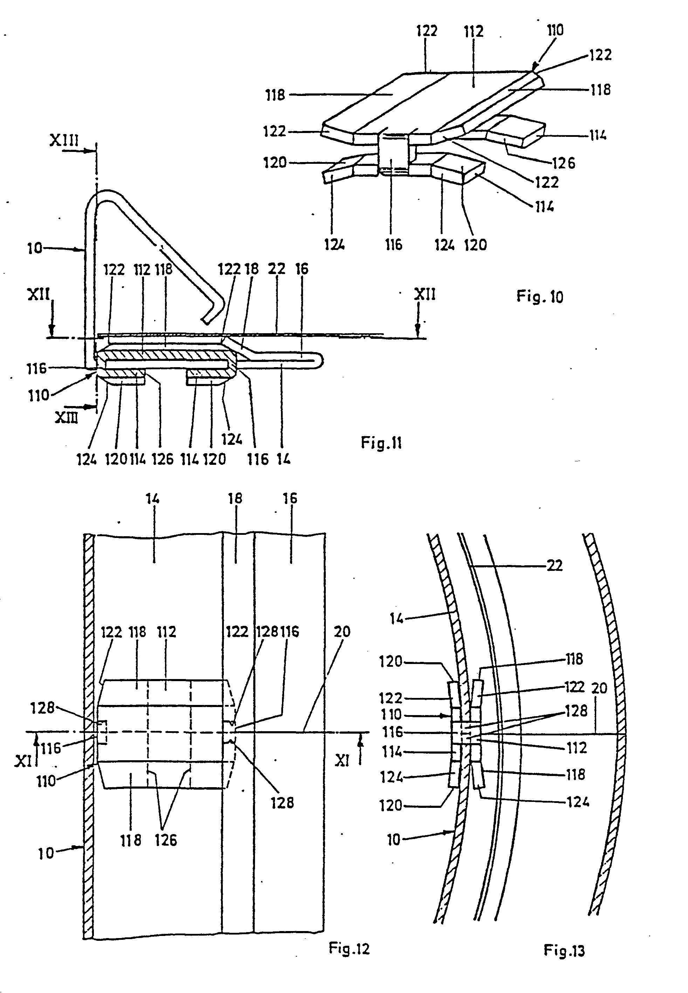

Eine sehr einfache weiteren Ausführungsform einer zusätzlichen Sicherung ist in Fig. 9 in Form einer in das Ende des Rohrabschnittes 22 eingesetzten Hohlniete 36'' gezeigt, an der sich die Außenkante 38 des Ringstegs 18 abstützt. Auch hier können natürlich, obwohl nur eine Hohlniete 36'' dargestellt ist, mehrere Hohlnieten rings um den Umfang des Blechrohrabschnittes 22 vorgesehen werden.

In den Fig. 10 - 17 sind zwei Ausführungsbeispiele einer Klammer zum Festlegen der an den axialen Schlitz angrenzenden Enden des Flanschringes dargestellt. Die in den Fig. 10 bis 13 dargestellte erste Ausführungsform ist einstückig aus Federstahlblech gebogen.

Die allgemein mit 110 bezeichnete Klammer weist einen Oberteil 112 und einen Unterteil 114 auf. Oberteil 112 und Unterteil 114 sind durch schmale, an ihren Stirnseiten sitzende Stege 116 miteinander verbunden. Zur Erleichterung des Einfädelns der Enden des Flanschrings 10 zwischen Oberteil 112 und Unterteil 114 weisen Oberteil und Unterteil jeweils voneinander divergierende Endabschnitte 118 bzw. 120 auf. Jeder Endabschnitt 118 bzw. 120 weist seitlich eine Anschrägung 122 bzw. 124 nach innen auf, die das Ansetzen der Klammer 110 an die Flanschringenden zusätzlich erleichtern.

Der Unterteil 114 der Klammer 110 weist eine Unterbrechung 126 auf, da die gesamte Klammer 110 aus einem Blechstreifen durch Ausstanzen und Biegen einstückig hergestellt ist. Der Unterteil 114 besteht daher aus zwei einander gegenüberliegenden Teilen, deren Klemmkraft in radialer Richtung des Flanschrings durch die Unterbrechung 126 jedoch nicht beeinträchtigt ist. In axialer Richtung wird der Unterteil 114 nicht auf Druck oder Zug beansprucht.

In der aus den Fig. 2 - 4 ersichtlichen Weise ist die Klammer 110 nach dem Eintreiben des Flanschrings 10 in das Ende des dünnwandigen runden Blechrohres 22 zu beiden Seiten des Schlitzes 20 auf die Enden des Schenkels 14 reibungsschlüssig aufgepreßt, wobei der ursprüngliche Abstand zwischen Oberteil 112 und Unterteil 114 im mittleren, nicht divergierenden Abschnitt etwas geringer ist als die Stärke des Schenkels 14. Durch das Aufpressen der Klammer 110 auf die Enden des Schenkels 14 wird dieser federnd etwas aufgespreizt, so daß er mit Reibungssitz fest auf dem Schenkel 14 sitzt.

Gleichzeitig schließt sich beim Eintreiben des Flanschrings 10 in das Rohr 22 durch die über den Ringsteg 18 und den Zentrierschenkel 16 vom Rohr 22 ausgeübte Radialkraft der Schlitz 20 zu einer Naht, so daß die Enden des Flanschrings 10 fest gegeneinander gepreßt werden. Dabei dringen die hochkant stehenden Stege 116 unter Bildung von Nuten 128 in beide Enden des Schenkels 14 ein und verankern diese dadurch gegenseitig gegen axiales Verrutschen. So sind die beiden Flanschringenden längs des Schlitzes 20 sowohl in radialer als auch in axialer Richtung sicher aneinander festgelegt.

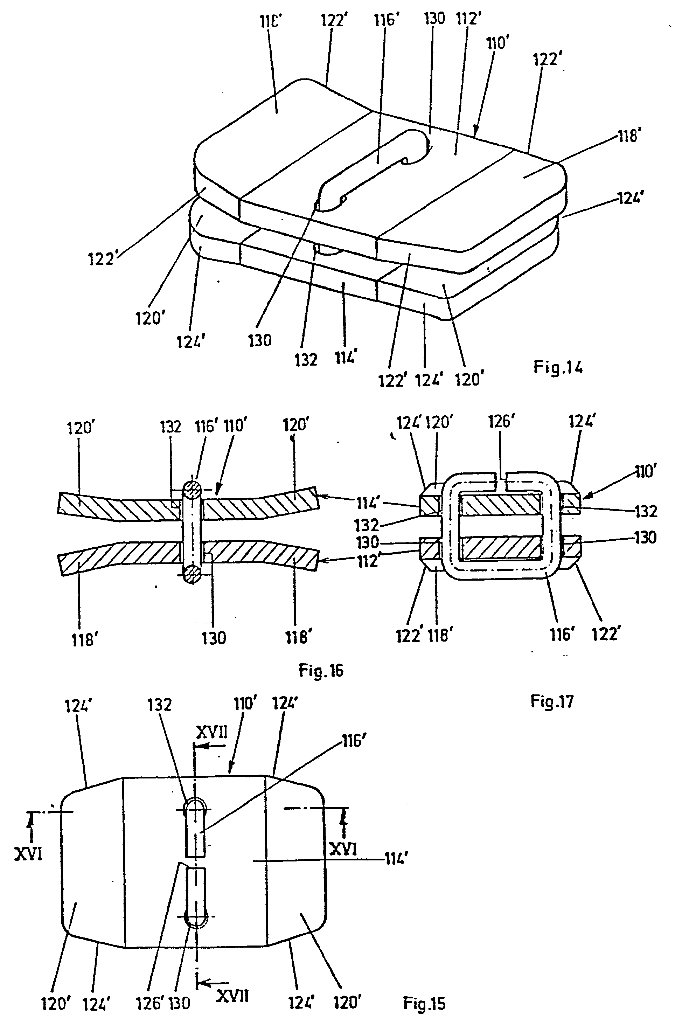

Die in den Fig. 14 - 17 dargestellte zweite Ausführungsform der Klammer 110' besteht aus einem Oberteil 112' und einem gegenüberliegenden Unterteil 114', die jeweils aus einem normalen Stahlblech hergestellt sind. Oberteil und Unterteil weisen zur Erleichterung des Einfädelns der Enden des nicht dargestellten Flanschrings jeweils voneinander divergierende Endabschnitte 118' und 120' auf. Jeder Endabschnitt 118' bzw. 120' weist seitlich eine Anschrägung 122' bzw. 124' zur weiteren Erleichterung des Ansetzens der Klammer 110' auf. Oberteil 112' und Unterteil 114' sind bei dieser Ausführungsform durch einen etwa rechteckig gebogenen Federstahlbügel 116' zusammengehalten, der durch je zwei sich überdeckende Löcher 130 bzw. 132 des Oberteils 112' bzw. des Unterteils 114' geführt ist und an den Außenflächen von Oberteil und Unterteil anliegt. Die Unterbrechung 126' des einstückig gebogenen Federstahlbügels 116' liegt etwa in der Mitte des Unterteils 114'.

Da zwischen Oberteil 112' und Unterteil 114 die nicht dargestellten Enden des Flanschrings eingesteckt werden, werden Oberteil und Unterteil durch Reibungsschluß mit dem Flanschring etwa in der in den Figuren dargestellten Lage gehalten, wobei ein nach innen gerichteter Druck vom Federstahlbügel 116 ausgeübt wird, der die Flanschringenden aneinander festlegt. Ein Verrutschen der Enden in axialer Richtung des Flanschrings wird durch Eindringen der zwischen Oberteil 112' und Unterteil 114' gelegenen Abschnitte des Federstahlbügels 116' in die dem axialen Schlitz des Flanschrings anliegenden Kinten zusätzlich verhindert, wobei sich den Nuten 128 in den Fig 12 und 13 entsprechende Nuten auch bei dieser Ausführungsform während des Einschlagens des Flanschrings in das Ende des Blechrohrabschnittes ausbilden.

## Patentansprüche

1. Auf ein dünnwandiges rundes Blechrohr aufsetzbarer einstückiger Flanschring zur Herstellung einer Stoßverbindung zwischen zwei Rohrabschnitten mit einem etwa rddial nach außen stehenden Befestigungsflansch und einem vom inneren Ende des Befestigungsflansches abstehenden Schenkel, gekennzeichnet durch einen vom Schenkel (14) schräg nach außen zum Befestigungsflansch (12) hin abgewinkelten Ringsteg (18), wobei Schenkel (14) und Ringsteg (18) unter Vorspannung ins Rohrinnere eintreibbar sind.

2. Flanschring nach Anspruch 1, dadurch gekennzeichnet, daß der größte Durchmesser des Schenkels (14) kleiner und der größte Durchmesser des Ringstegs (18) im unbelasteten Zustand größer ist als der Innendurchmesser des Rohres (22).

3. Flanschring nach Anspruch 1 oder 2, dadurch gekennzeichnet, daß der Schenkel (14) etwa senkrecht vom Befestigungsflansch (12) absteht.

4. Flanschring nach Anspruch 3, dadurch gekennzeichnet, daß der Schenkel (14) einen etwa parallel zu sich selbst zurückgebogenen, den Ringsteg (18) tragenden Zentrierschenkel (16) aufweist.

5. Flanschring nach einem der vorangehenden Ansprüche, dadurch gekennzeichnet, daß der Befestigungsflansch (12) an seinem äußeren Ende einen zur gleichen axialen Seite wie der Schenkel (14) um mehr als 90° umgebogengen Spannteil (30) aufweist.

6. Flanschring nach Anspruch 5, dadurch gekennzeichnet, daß am inneren Ende des Spannteils (30) ein schräg nach innen zum Befestigungsflansch (12) hin gebogener Führungsteil (34) vorgesehen ist.

7. Flanschring nach einem der vorangehenden Ansprüche, dadurch gekennzeichnet, daß der Flanschring (10) einen axialen Schlitz (20) enthält.

8. Verfahren zur Herstellung des Flanschrings nach einem der vorangehenden Ansprüche, dadurch gekennzeichnet, daß ein langgestreckter Blechstreifen profiliert und anschließend in Ringform gebogen wird.

9. Zwei Flanschringe nach einem der vorangehenden Ansprüche aufweisende Stoßverbindung zwischen zwei dünnwandigen runden Blechrohrabschnitten, dadurch gekennzeichnet, daß die beiden Befestigungsflansche (12) unter Zwischenlegung eines Dichtungsrings (26) durch Befestigungsmittel (28, 32) aneinander festgelegt sind.

10. Stoßverbindung nach Anspruch 9 mit Flanschringen nach einem der Ansprüche 5 oder 6, dadurch gekennzeichnet, daß auf der Außenseite der beiden Spannteile (30) ein Spannring (32) kraftschlüssig anliegt.

11. Stoßverbindung nach einem der Ansprüche 9 oder 10, dadurch gekennzeichnet, daß auf der Innenseite des Endes jedes Blechrohrabschnittes (22) Vorsprünge (36, 36', 36'') angebracht sind, an denen sich die Außenkante (38) des jeweiligen Ringstegs (18) abstützt.

12. Flanschring nach Anspruch 7, dadurch gekennzeichnet, daß zur gegenseitigen Festlegung der an den axialen Schlitz (20) angrenzenden Enden des Flanschrings (10) eine gemeinsame Klammer (110) vom Schlitz (20) her auf beide Enden reibungsschlüssig aufgesteckt ist.

13. Flanschring nach Anspruch 12, dadurch gekennzeichnet, daß die Klammer (110) auf die beiden an den Schlitz (20) angrenzenden Enden des Schenkels (14) aufsteckbar ist.

14. Flanschring nach Anspruch 13, dadurch gekennzeichnet, daß die Klammer (110) einen Oberteil (112), welcher an der zum Rohr (22) hinweisenden Fläche der Enden des Schenkels (14) zur Anlage kommt, und einen Unterteil (114) aufweist, welcher an der vom Rohr (22) wegweisenden Fläche der Enden des Schenkels (14) zur Anlage kommt.

15. Flanschring nach Anspruch 14, dadurch gekennzeichnet, daß Oberteil (112) und Unterteil (114) durch senkrecht dazu verlaufende schmale Stege (116, 116') miteinander verbunden sind, die beim Eintreiben von Schenkel (14) und Ringsteg (18) in das Rohr (22) unter Bildung von Nuten (128) in die Stirnflächen der an den Schlitz (20) angrenzenden Enden des Schenkels (14) eindringen.

16. Flanschring nach Anspruch 14 oder 15, dadurch gekennzeichnet, daß Ober- und Unterteil (112, 114) zum leichteren Einfädeln der Enden des Flanschrings (110) in beiden Aufsteckrichtungen divergierende Endabschnitte (118, 120) aufweisen.

17. Flanschring nach Anspruch 16, dadurch gekennzeichnet, daß die divergierenden Endabschnitte (118, 120) seitlich nach innen verlaufende Anschrägungen (122, 124) aufweisen

18. Flanschring nach einem der Ansprüche 15 bis 17, dadurch gekennzeichnet, daß die Klammer (110) aus einem einstückigen Blechteil besteht, wobei Ober- oder Unterteil (112 bzw. 114) senkrecht zum Schlitz (20) eine Unterbrechung (126) aufweist.

19. Flanschring nach einem der Ansprüche 12 bis 18, dadurch gekennzeichnet, daß die Klammer (110) aus Federstahlblech hergestellt ist.

20. Flanschring nach einem der Ansprüche 12 bis 17, dadurch gekennzeichnet, daß Oberteil (112') und Unterteil (114') durch einen Federstahlbügel zusammengehalten sind, der durch je zwei sich überdeckende Löcher von Oberteil (112') und Unterteil (114') geführt ist und an den Außenflächen von Oberteil (112') und Unterteil (114') anliegt.

21. Flanschring nach Anspruch 20, dadurch gekennzeichnet, daß der Federstahlbügel allgemein C-förmig ausgebildet ist und daß die Unterbrechung (126') des Federstahlbügels etwa in der Mitte der Außenfläche des Unterteils (114') liegt.

## Claims

1. A one-piece flange ring for attachment on to a thin-walled, round metal pipe, for making a butt connection between two pipe sections, having a substantially radially outward-projecting fixing flange and a leg projecting from the inner end of the fixing flange, characterised by an annular web (18) which is bent outwardly at an angle from the leg (14) towards the fixing flange (12), whereby the leg (14) and the annular web (18) can be driven into the inside of the pipe under pressure.

2. A flange ring as claimed in Claim 1, characterised in that the largest diameter of the leg (14) is smaller and the largest diameter of the annular web (18) is larger, in its free condition, than the inside diameter of the pipe (22).

3. A flange ring as claimed in Claim 1 or 2, characterised in that the leg (14) projects substantially at right angles from the fixing flange (12).

4. A flange ring as claimed in Claim 3, characterised in that the leg (14) has a centering limb (16) which is bent back substantially parallel to itself and carries the annular web (18).

5. A flange ring as claimed in any one of the preceding claims, characterised in that the fixing flange (12) has, on its outer end, a clamping part (30) which is bent through more than 90° towards the same axial side as the leg (14).

6. A flange ring as claimed in Claim 5, characterised by a guide part (34) which is bent inwards at an angle towards the fixing flange (12), on the inner end of the clamping part (30).

7. A flange ring as claimed in any one of the preceding claims, characterised in that the flange ring (10) has an axial slot (20).

8. A method for manufacturing a flange ring as claimed in any one of the preceding claims, characterised in that a longitudinally extending sheet-metal strip is profiled and then bent in to an annular form.

9. Two flange rings as claimed in any one of the preceding claims, providing a butt connection between two thin-walled, round metal pipe sections, characterised in that the fixing flanges (12) are fixed against each other by fastening means (28, 32) with an interposed sealing ring (26).

10. A butt connection as claimed in Claim 9 having flange rings as claimed in any one of Claims 5 or 6, characterised in that a clamping ring (32) is positioned in positive engagement on the outer side of the two clamping parts (30).

11. A butt connection as claimed in Claim 9 or 10, characterised in that projections (36, 36', 36'') are provided on the inner side of the end of each metal pipe section (22), on which projections the outer edge (38) of the respective annular web (18) is engaged.

12. A flange ring as claimed in Claim 7, characterised in that, for the mutual fixing of the ends of the flange ring (10) which are adjacent to the axial slot (20), a common clamp (110) frictionally engages on to the two ends of the slot (20).

13. A flange ring as claimed in Claim 12, characterised in that the clamp (110) can be attached on to the two ends of the leg (14) which are adjacent to the slot (20).

14. A flange ring as claimed in Claim 13, characterised in that the clamp (110) has an upper part (112) which contacts the surface of the ends of the leg (14) which faces towards the pipe (22), and a lower part (114) which contacts the surface of the ends of the leg (14) which faces away from the pipe (22).

15. A flange ring as claimed in Claim 14, characterised in that the upper part (112) and the lower part (114) are connected together by narrow webs (116, 116') which run at right angles thereto and which, when the leg (14) and the annular web (18) are driven into the pipe (22), penetrate by means of grooves (128) into the end faces of the ends of the leg (14), which ends are adjacent to the slot (20).

16. A flange ring as claimed in Claim 14 or 15, characterised in that the upper and lower parts (112, 114) have diverging end sections (118, 120) for easy insertion of the ends of the flange ring (110) in both attachment directions.

17. A flange ring as claimed in Claim 16, characterised in that the diverging end sections (118, 120) have bevels (122, 124) which run laterally inwardly.

18. A flange ring as claimed in any one of Claims 15 to 17, characterised in that the clamp (110) is a one-piece sheet-metal part, with the upper or lower part (112 or 114) having a gap (126) at right angles to the slot (20).

19. A flange ring as claimed in any one of Claims 12 to 18, characterised in that the clamp (110) is made from spring-steel sheet.

20. A flange ring as claimed in any one of Claims 12 to 17, characterised in that the upper part (112') and the lower part (114') are held together by a spring-steel clip which is guided through two overlapping holes of the upper part (112') and the lower part (114') and bears against the outer surfaces of the upper part (112') and the lower part (114').

21. A flange ring as claimed in Claim 10, characterised in that the spring-steel clip is in the form of a C and that the gap (126') of the spring-steel clip is located substantially in the centre of the outer surface of the lower part (114').

## Revendications

1.- Anneau de bridage en une seule pièce susceptible d'être pose sur un tube rond en tôle à paroi mince pour réaliser une jonction bout à bout entre deux tronçons de tubes, anneau comportant une collerette de fixation orientée à peu près radialement vers l'extérieur et une aile s'écartant de l'extrémité interne de la collerette de fixation, anneau de bridage caractérisé en ce qu'il comporte un voile annulaire (18) plié obliquement vers l'extérieur en direction de la collerette de fixation (12), l'aile (14) et le voile annulaire (18) étant susceptibles d'être introduits sous précontrainte dans l'intérieur du tube.

2.- Anneau de bridage selon la revendication 1, caractérisé en ce que le diamètre maximal de l'aile (14) est inférieur au diamètre interne du tube (22), tandis que le diamètre maximal du voile annulaire (18), lorsqu,il n'est pas précontraint, est supérieur à ce diamètre interne.

3.- Anneau de bridage selon la revendication 1 ou 2, caractérisé en ce que l'aile (14) s'écarte à peu pres perpendiculairement de la collerette de fixation (12).

4.- Anneau de bridage selon la revendication 3, caractérisé en ce que l'aile (14) comporte une aile de centrage (16) repliée à peu près parallèlement par rapport à elle-même et portant le voile annulaire (18).

5.- Anneau de bridage selon une des précédentes revendications, caractérisé en ce que la collerette de fixation (12) comporte à son extrémite extérieure, une partie de bridage (30) repliée de plus de 90° vers le même côté axial que l'aile (14).

6.- Anneau de bridage selon la revendication 5, caractérisé en ce qu'à l'extrémité interne de la partie de bridage (30) il est prévu une partie de guidage (34) recourbée obliquement vers l'intérieur en direction de la collerette de fixation (12).

7.- Anneau de bridage selon une des precédentes revendications, caractérisé en ce que cet anneau de bridage (10) comporte une fente axiale (20).

8.- Procédé pour realiser l'anneau de bridage selon une des précédentes revendications, caractérisé en ce qu'une bande de tôle longiforme est profilée et ensuite courbée en forme d'anneau.

9.- Jonction bout à bout entre deux tronçons de tubes ronds en tôle à paroi mince, comportant deux anneaur de bridage selon l'une des précédentes revendications, jonction caractérisée en ce que les deux collerettes de fixation (12) sont firées l'une sur l'autre par des moyens de fixation (28, 32) et avec interposition d'un anneau d'étanchement (26).

10.- Jonction bout à bout selon la revendication 9, avec des anneaur de bridage selon une des revendications 5 ou 6, caractérisée en ce que sur le côté externe des deux parties de bridage (30) est appliqué à force, un anneau de bridage (32).

11.- Jonction bout à bout selon une des revendications 9 ou 10, caractérisée en ce que sur la face interne de l'extremite de chacun des tronçons (22) de tubes en tôle, sont ménagées des saillies (36, 36', 36") sur lesquelles prend appui le bord externe (38) du voile annulaire correspondant (18).

12.- Anneau de bridage selon la revendication 7, caractérisé en ce que pour la fixation réciproque des extrémités de l'anneau de bridage (10), contigües de la fente ariale (20), une pince commune (110) adhérant par frottement est emboîtée à partir de la fente (20) sur ces deux extrémités.

13.- Anneau de bridage selon la revendication 12, caractérisé en ce que la pince (110) est susceptible d'être emboîtée sur les deux extrémités contigües à la fente (20) de l'aile (14).

14.- Anneau de bridage selon la revendication 13, caractérisé en ce que la pince (110) comporte une partie supérieure (112) qui vient s'appliquer sur les surfaces tournées vers le tube (22) des ertrémités de l'aile (14), et une partie inférieure (114) qui vient s'appliquer sur les surfaces opposées au tube (22) des extrémités de l'aile (14).

15.- Anneau de bridage selon la revendication 14, caractérisé en ce que la partie supérieure (112) et la partie inférieure (114) sont reliées ensemble par des barrettes étroites (116, 116') s'étendant perpendiculairement par rapport à elles, barrettes qui lors de l'introduction de l'aile (14) et du voile annulaire (18) dans le tube (22) pénètrent, avec formation de gorges (128) dans les faces frontales des extrémités de l'aile (14) contigües à la fente (20).

16.- Anneau de bridage selon la revendication 14 ou 15, caractérisé en ce que la partie supérieure et la partie inférieure (112, 114) comportent des parties d'extrémités (118, 120) divergeant dans les deux sens d'emboîtement pour permettre une introduction plus facile des extrémités de l'anneau de bridage (110).

17.- Anneau de bridage selon la revendication 16, caractérisé en ce que les parties d'extrémités divergentes (118, 120) comportent latéralement des biseaux (122, 124) s'étendant vers l'intérieur.

18.- Anneau de bridage selon une des revendications 15 à 17, caractérisé en ce que la pince (110) est constituée d'une seule pièce en tôle, la partie supérieure ou inférieure (112 ou bien 114) comportant perpendiculairement à la fente (20) une interruption (126).

19.- Anneau de bridage selon une des revendications 12 à 18, caractérisé en ce que la pince (110) est réalisée en tôle d'acier à ressort.

20.- Anneau de bridage selon une des revendications 12 à 17, caractérisé en ce que la partie supérieure (112') et la partie inférieure (114') sont maintenues ensemble par un étrier en acier à ressort qui passe à travers deux trous se recouvrant de la partie supérieure (112') et de la partie inférieure (114') et qui s'applique sur les surfaces externes de la partie supérieure (112') et de la partie inférieure (114').

21.- Anneau de bridage selon la revendication 20, caractérisé en ce que l'étrier en acier à ressort a dans l'ensemble une forme en C et que la solution de continuité (126') de cet étrier en acier à ressort se situe à peu près dans le milieu de la surface externe de la partie inférieure (114').

Fig.1

Fig.2

0 078 946

Fig.3

Fig.4

0 078 946

Fig.5

Fig.6

Fig.7

Fig.8

Fig.9

Fig. 10

Fig.11

Fig.12

Fig.13

Fig.14

Fig.16

Fig.17

Fig.15